# EUROPÄISCHE PATENTSCHRIFT

(11) **EP 1 547 917 B1**
(45) Veröffentlichungstag und Bekanntmachung des Hinweises auf die Patenterteilung: **22.08.2007**
(21) Anmeldenummer: 04028397.0
(22) Anmeldetag: 01.12.2004
(51) Int. Cl.: B64C 13/26

(54) **Vorrichtung zur Ansteuerung und Verstellung von Klappen an Flugzeugtragflächen**
Aircraft wing flap control system
Dispositif de commande des gouvernes d'une aile d'avion

(30) Priorität: 23.12.2003 DE 10361891
(43) Veröffentlichungstag der Anmeldung: 29.06.2005
(73) Patentinhaber: Airbus Deutschland GmbH, 21129 Hamburg (DE)
(72) Erfinder: Pohl, Ulrich, Dipl.-Ing., 28717 Bremen (DE); Lulla, Christian, Dr.-Ing., 28213 Bremen (DE); Thomas, Carsten, Dr.-Ing., 28203 Bremen (DE); Klönne, Martin, Dipl.-Ing., 28719 Bremen (DE)
(74) Vertreter: Hansmann, Dierk

(56) Entgegenhaltungen:
- EP-A- 0 215 211
- DE-A1- 3 114 143
- US-A- 5 743 490

## Beschreibung

Die Erfindung bezieht sich auf eine Vorrichtung zur Ansteuerung und Verstellung von Vorder- und/oder Hinterklappen an Flugzeugtragflächen durch zugeordnete Antriebseinheiten, die über im Flügel integrierte Antriebswellen betätigbar sind und eine Rotationsbewegung in eine Translationsbewegung wandeln, wobei die Antriebswellen über einen Zentralantrieb angetrieben werden und die Antriebswellen benachbarter Klappen über ein Differentialgetriebe gekoppelt sind und die Antriebswelle einer Klappe einerseits mit dem Zentralantrieb verbunden und andererseits als Antrieb mit dem Differentialgetriebe gekoppelt ist und die Antriebswelle der benachbarten Klappe ebenfalls über das Differentialgetriebe mit dem Zentralantrieb gekoppelt ist, und wobei ein weiterer Antriebsstrang des Differentialgetriebes mit einem Sekundärantrieb gekoppelt ist, so dass die Bewegungen der Antriebsstränge des Differentialgetriebes durch Zentralantrieb und Sekundärantrieb einander überlagerbar sind.

Landeklappen und Vorflügelelemente an Flugzeugtragflächen werden in bekannter Weise mittels Anordnungen betätigt, die aus einer zentralen Antriebseinheit zwei Drehwellenantriebssträngen für einen linken und einen rechten Tragflügel sowie mehreren dezentralen Antriebseinheiten und Betätigungsmechaniken bestehen. In derartigen Anordnungen wird mittels der zentralen Antriebseinheit eine Rotationsbewegung erzeugt, die über die Drehwellenstränge zu den den Klappen zugeordneten Antriebseinheiten übertragen wird. Diese wandeln die Rotationsbewegung in eine translatorische Bewegung um und übertragen diese auf den zugehörigen Betätigungsmechanismus, der wiederum die Landeklappen oder Vorflügelelemente in gewünschter Weise betätigt. Um ein gleichmäßig-synchrones Betätigen aller Landeklappen bzw. Vorflügelelemente zu garantieren, sind gewöhnlich alle Landeklappen bzw. Vorflügelelemente einer Tragfläche mit ein und demselben Drehwellenantriebsstrang verbunden.

Es wird dagegen ein unabhängiges Verstellen der einzelnen Landeklappen oder Vorflügelelemente an einem Flügel angestrebt, da es abhängig vom Flugzugstand aerodynamische Vorteile bringen kann. Hierzu zählen beispielsweise die Möglichkeiten der Beeinflussung der Verteilung des Auftriebs über die Tragflächenspannweite, der Beeinflussung der durch die Tragflächen induzierten Luftverwirbelung sowie des Ausgleichs von Asymmetrien in der Flugzeugkonfiguration, wie sie beispielsweise aufgrund eines Ausfalls eines Triebwerks auftreten, mittels gegenläufig wirkender Auftriebsasymmetrien.

Aus Gründen der Flugmechanik müssen im allgemeinen auch bei unabhängigem Verstellen von Landeklappen oder Vorflügelelementen eines Tragflügels die erzielten Konfigurationen, d.h. die eingestellten Positionen der einzelnen Landeklappen oder Vorflügelelemente an der linken und rechten Tragfläche paarweise symmetrisch sein. Für besondere Anwendungsfälle sind jedoch auch asymmetrische Konfigurationen vorteilhaft, wie vorher angegeben.

Mit bekannten Anordnungen ist das unabhängige Verstellen einzelner Landeklappen oder Vorflügelelemente nicht möglich. Es sind zwar Anordnungen bekannt, die durch Vervielfachung einiger Elemente und mechanische Entkopplung von Teilen der Anordnung ein unabhängiges Verfahren der Landeklappen bzw. Vorflügelelemente ermöglichen. Für solche Anordnungen sind Verdoppelungen der Anzahl der Antriebseinheiten und Drehwellenantriebsstränge erforderlich, die dann auf jeweils ein Paar von inneren bzw. äußeren Landeklappen oder Vorflügelelementen mechanisch entkoppelt wirken, wie es beispielsweise vom Flugzeugtyp Boeing B747 bekannt ist. Mit diesen Anordnungen werden Landeklappen oder Vorflügelelemente paarweise symmetrisch unabhängig verstellt, es ist sowohl ein paarweises symmetrisches als auch ein asymmetrisches unabhängiges Verstellen der Klappen damit möglich. Weiter sind auch dezentrale, mechanisch nicht gekoppelte Antriebe für einzelne Landeklappen oder Vorflügelelemente bekannt.

Bei den bekannten Anordnungen mit vervielfachten Antriebseinheiten und Drehwellensträngen kann als nachteilig angesehen werden, dass durch die zweite zentrale Antriebseinheit sowie diverse zusätzliche Getriebe und Drehwellen ein deutliches Mehrgewicht gegenüber herkömmlichen Anordnungen entsteht. Bei Anordnungen mit dezentralen, mechanisch voneinander entkoppelten Einzelantrieben ist die Dimensionierung der Antriebe so vorzusehen, dass bei Ausfall eines der Antriebe noch eine Not-Funktionalität bestehen bleibt. Dies führt bezogen auf den Normalbetrieb zu deutlich überdimensionierten und damit schweren Antriebselementen und folglich ebenfalls zu einem wesentlichen Mehrgewicht.

Aus der EP 0 215 211 A1 ist eine Vorrichtung zur Ansteuerung und Verstellung von Vorder- und/oder Hinterklappen an Flugzeugtragflächen durch zugeordnete Antriebseinheiten, die über im Flügel integrierte Antriebswellen betätigbar sind und eine Rotationsbewegung in eine Translationsbewegung wandeln, der eingangs vorausgesetzten Art bekannt. Bei dieser bekannten Vorrichtung sind mehrere in Spannweitenrichtung aneinander anschließende Klappensegmente vorgesehen, die jeweils in Spannweitenrichtung torsionsweich ausgebildet und damit in sich verwindbar sind. Einander benachbarte Klappensegmente sind miteinander so gekoppelt, dass zwischen diesen stets ein aerodynamischer glatter Übergang gewährleistet ist. Zum Herbeiführen der besagten Torsion der einzelnen Klappensegmente ist in der Torsionswelle zwischen zwei mit ein und derselben Klappe gekoppelten Antriebseinheiten ein Differentialgetriebe vorgesehen, dessen dritter Antriebsstrang mit einem Hilfsantrieb und/oder einer Bremse gekoppelt ist. Der aerodynamische glatte Übergang zwischen einzelnen Klappensegmenten ist entweder dadurch gewährleistet, dass zwei benachbarte Segmente durch eine gemeinsame Antriebseinheit betätigt und dadurch zwangsgekoppelt sind, oder die benachbarten Klappen verfügen über jeweilige eigene Antriebseinheiten, die von der Übergangsstelle in Spannweitenrichtung zur Mitte des Klappensegments hin entfernt sind. Damit bei Torsion der Klappen an der Übergangsstelle im letzteren Falle der besagte glatte Übergang gewährleistet ist, ist in dem Torsionswellenstrang zwischen den benachbarten Antriebseinheiten der benachbarten Klappen ein weiteres Differentialgetriebe vorgesehen, so dass die benachbarten Antriebseinheiten an die Torsion bzw. Verwindung der Segmente angepaßt unterschiedlich verstellt werden können. Eine unabhängige Verstellung der einzelnen Klappensegmente ist nicht vorgesehen, da sonst der als unabdingbar vorgesehene aerodynamisch glatte Übergang zwischen den einzelnen Segmenten nicht gewährleistet ist.

Die Aufgabe der Erfindung ist, ein möglichst einfaches Antriebskonzept für Landeklappen und Vorflügelelemente mit relativ geringem Gewicht zu schaffen, mit welchen die Klappen voneinander unabhängig positionierbar sind.

Die Lösung dieser Aufgabe erfolgt erfindungsgemäß dadurch, dass die einer Klappe zugehörigen Antriebseinheiten durch die jeweilige Welle direkt miteinander verbunden sind und benachbarte Klappen über das Differentialgetriebe unabhängig voneinander betätigbar sind.

Für eine symmetrische Verstellung der an beiden Tragflügeln vorgesehenen Klappen wird vorgeschlagen, dass ein zentraler Sekundärantrieb für die Klappen beider Tragflügel mit jeweils zugeordnetem Differentialgetriebe zur symmetrischen Positionierung vorgesehen ist.

Alternativ kann vorgesehen sein, dass Sekundärantriebe beider Tragflügel über eine Recheneinheit zur symmetrischen Positionierung steuerbar sind.

Ferner wird vorgeschlagen, dass die Position der einzelnen Klappen jeder Seite repräsentierende Positionssignale der Recheneinheit zur Steuerung der zugeordneten Sekundärantriebe zuführbar sind.

Hierbei ist vorgesehen, daß die Recheneinheit einen abgestimmten Synchronisierungsalgorithmus aufweist.

In den Zeichnungen sind Ausführungsbeispiele der Erfindung schematisch dargestellt. Es zeigen:
- Fig. 1: eine Vorrichtung mit zwischengeschalteten Differentialgetrieben mit jeder Tragflügelseite zugeordnetem lokalen Sekundärantrieb;
- Fig. 2: eine Vorrichtung gemäß Fig. 1 mit einem gemeinsamen zentralen Sekundärantrieb und
- Fig. 3: eine Prinzipskizze eines Differentialgetriebes mit seinen Ein- und Ausgängen.

Bei dieser Anordnung sind für jede Tragflügelseite zwei benachbarte Landeklappen bzw. vorflügelelemente 1 und 2 dargestellt. Jede Klappe 1, 2 besitzt zugeordnete Antriebseinheiten 3. Der Antrieb für eine Verstellung erfolgt durch einen Zentralantrieb 9 über zugeordnete Antriebswellen 4 und 5, die jeweils mit den Antriebseinheiten 3 gekoppelt sind.

Die zugeordneten Antriebswellen 4 und 5 der benachbarten Klappen 1, 2 sind über ein Differentialgetriebe 6 miteinander gekoppelt, wobei zusätzlich ein dritter Strang 7 des Differentialgetriebes 6 mit einem Sekundärantrieb 8 mit Bremse verbunden ist. Die Drehzahl der Antriebswelle 4 wird durch die vorgegebene Eingangs-Drehzahl des Zentralantriebes 9 bestimmt. Die Drehzahl der Antriebswelle 5 ergibt sich aus der Eingangs-Drehzahl des Zentralantriebes 9 und der Drehzahl des Stranges 7 des Sekundärantriebes 8.

Unabhängige Positionen benachbarter Klappen 1, 2 ergeben sich somit aus den unterschiedlichen Drehzahlen der Antriebswellen 4 und 5 über die Zeit.

Als geeigneter Sekundärantrieb 8 kann beispielsweise ein lokaler Duplex-Elektromotor mit Untersetzungsgetriebe und einem Torque Limiter zur Lastbegrenzung eingesetzt werden. Andere lokale Antriebslösungen wie ein Simplex-Elektromotor oder Hydraulikmotor sind ebenso denkbar. Zur einseitigen Festsetzung des Differentialgetriebes bei passiviertem Sekundärantrieb wird eine passive Bremse, beispielsweise ein Constant-Friction-Devices oder eine aktive Bremse wie eine Power-Off-Brake, eingesetzt.

Als Halteeinrichtung für Fehlerfälle um asymmetrisches Verstellen der Landeklappen bzw. Vorflügelelemente 1, 2 bei Bruch der Antriebswelle zu verhindern, sind entweder passive Bremsen an den Antriebsstationen oder in der Antriebswelle platzierte aktive Bremsen.

Eine Anordnung mit lokalem Sekundärantrieb 8 gestattet das unabhängige Positionieren von Landeklappen bzw. Vorflügelelementen 1, 2 sowohl in paarweise, symmetrischer als auch in asymmetrischer Art und Weise.

Die paarweise symmetrische Positionierung wird über eine nicht näher dargestellte Recheneinheit mit einem Synchronisierungsalgorithmus gewährleistet, der Positionssignale von den einzelnen Landeklappen bzw. Vorflügelelementen 1, 2 als paarweise Informationen der rechten bzw. linken Tragfläche verwendet, um die Drehzahl der lokalen Sekundärantriebe 8 zu regeln.

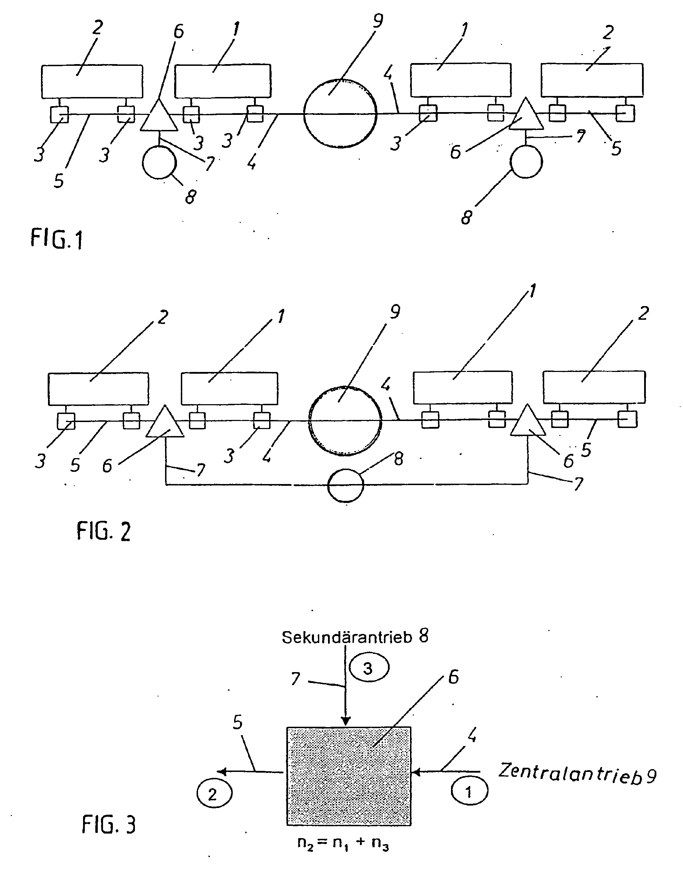

Eine weitere Ausführung gemäß Fig. 2 zeigt einen Sekundärantriebs 8 für die beschriebene Anordnung für beide Tragflügel mit den zugeordneten Differentialgetrieben 6. In diesem Fall können die Landeklappen bzw. vorflügelelemente 1, 2 eine Tragfläche zwar unabhängig, aber nur paarweise symmetrisch positioniert werden. Der Aufwand für die Regelung der symmetrischen Positionierung kann in dieser Variante jedoch entfallen.

## Patentansprüche

1. Vorrichtung zur Ansteuerung und Verstellung von Vorder-und/oder Hinterkantenklappen (1, 2) an Flugzeugtragflächen durch zugeordnete Antriebseinheiten (3), die über im Flügel integrierte Antriebswellen(4, 5) betätigbar sind und eine Rotationsbewegung in eine Translationsbewegung wandeln, wobei die Antriebswellen (4, 5) über einen Zentralantrieb(9) angetrieben werden und die Antriebswellen (4, 5) benachbarter Klappen (1, 2) über ein Differentialgetriebe (6) gekoppelt sind und die Antriebswelle (4) einer Klappe (1) einerseits mit dem Zentralantrieb (9) verbunden und andererseits als Antrieb mit dem Differentialgetriebe (6) gekoppelt ist und die Antriebswelle (5) der benachbarten Klappe (2) ebenfalls über das Differentialgetriebe (6) mit dem Zentralantrieb (9) gekoppelt ist, und wobei ein weiterer Antriebsstrang (7) des Differentialgetriebes (6) mit einem Sekundärantrieb (8) gekoppelt ist, so dass die Bewegungen der Antriebsstränge (4, 7) des Differentialgetriebes (6) durch Zentralantrieb (9) und Sekundärantrieb (8) einander überlagerbar sind, **dadurch gekennzeichnet, dass** die einer Klappe (1, 2) zugehörigen Antriebseinheiten (3) durch die jeweilige Welle (4, 5) direkt miteinander verbunden sind und benachbarte Klappen (1, 2) über das Differentialgetriebe (6) unabhängig voneinander betätigbar sind.

2. Vorrichtung nach Anspruch 1, **dadurch gekennzeichnet, dass** ein zentraler Sekundärantrieb (8) für die Klappen (1, 2) beider Tragflügel mit jeweils zugeordnetem Differentialgetriebe (6) zur symmetrischen Positionierung vorgesehen ist.

3. Vorrichtung nach Anspruch 1, **dadurch gekennzeichnet, dass** Sekundärantriebe (8) beider Tragflügel über eine Recheneinheit zur symmetrischen Positionierung steuerbar sind.

4. Vorrichtung nach einem der Ansprüche 1 bis 3, **dadurch gekennzeichnet, dass** die Position der einzelnen Klappen (1, 2) jeder Seite repräsentierende Positionssignale der Recheneinheit zur Steuerung der zugeordneten Sekundärantriebe (8) zuführbar sind.

5. Vorrichtung nach Anspruch 4, **dadurch gekennzeichnet, dass** die Recheneinheit einen Synchronisierungsalgorithmus aufweist.

## Claims

1. Device for controlling and adjusting leading and/or trailing edge flaps (1, 2) on aircraft aerofoils through associated drive units (3) which can be actuated via drive shafts (4, 5) integrated into the aerofoil and convert a rotational movement into a translational movement, wherein the drive shafts (4, 5) are driven via a central drive (9) and the drive shafts (4, 5) of adjacent flaps (1, 2) are coupled via a differential gear (6) and the drive shaft (4) of one flap (1) is connected on one side to the central drive (9) and coupled on the other as a drive to the differential gear (6) and the drive shaft (5) of the adjacent flap (2) is likewise coupled via the differential gear (6) to the central drive (9), and wherein a further drive train (7) of the differential gear (6) is coupled to a secondary drive (8), so that the movements of the drive trains (4, 7) of the differential gear (6) can be superimposed on one another through the central drive (9) and the secondary drive (8), **characterised in that** the drive units (3) associated with one flap (1, 2) are directly connected together through the respective shaft (4, 5) and adjacent flaps (1, 2) can be actuated independently of one another via the differential gear (6).

2. Device according to Claim 1, **characterised in that** a central secondary drive (8) for the flaps (1, 2) of both aerofoils is provided with a respective associated differential gear (6) for symmetrical positioning.

3. Device according to Claim 1, **characterised in that** the secondary drives (8) of both aerofoils can be controlled via an arithmetic unit for symmetrical positioning.

4. Device according to any one of Claims 1 to 3, **characterised in that** position signals representing the position of the individual flaps (1, 2) can be fed to the arithmetic unit for controlling the associated secondary drives (8).

5. Device according to Claim 4, **characterised in that** the arithmetic unit comprises a synchronisation algorithm.

## Revendications

1. Procédé de commande de volets de bords d'attaque avant et/ou arrière (1, 2) sur des surfàces porteuses d'avion selon lequel:
- ces volets sont commandés par des unités d'entraînement (3) associées qui peuvent être actionnées par des arbres d'entraînement (4, 5) intégrés à l'aile de manière à transformer un mouvement de rotation en un mouvement de translation,
- les arbres d'entraînement (4, 5) sont actionnés par un entraînement central (9),
- les arbres d'entraînement (4, 5) de volets voisins (1, 2) sont accouplés par un mécanisme différentiel (6),
- l'arbre d'entraînement (4) d'un volet (1) est d'une part relié à l'entraînement central (9) et d'autre part en tant qu'entraînement est accouplé au mécanisme différentiel (6), l'arbre d'entraînement (5) du volet voisin (2) étant également accouplé par le mécanisme différentiel (6) à l'entraînement central (9),
- une autre ligne d'entraînement (7) du mécanisme différentiel (6) est accouplée à un entraînement secondaire (8), de sorte que les mouvements des lignes d'entraînement (4, 7) du mécanisme différentiel (6) produits par l'entraînement central (9) et par l'entraînement secondaire (8) peuvent se superposer l'un à l'autre, **caractérisé en ce que** les unités d'entraînement (3) appartenant à un volet (1, 2) sont reliées directement entre elles par l'arbre correspondant (4, 5) et les volets voisins (1, 2) peuvent être actionnés indépendamment l'un de l'autre par le mécanisme différentiel (6).

2. Dispositif selon la revendication 1, **caractérisé en ce qu'**un entraînement secondaire central (8) est prévu pour les volets (1, 2) des deux ailes porteuses, avec chaque fois un mécanisme différentiel associé (6) pour réaliser un positionnement symétrique.

3. Dispositif selon la revendication 1, **caractérisé en ce que** les entraînements secondaires (8) des deux ailes porteuses peuvent être commandés par une unité de calcul de manière à être positionnés symétriquement.

4. Dispositif selon une des revendications 1 à 3, **caractérisé en ce que** les signaux de position représentant de chaque côté la position des volets individuels (1, 2), peuvent être adressés à l'unité de calcul pour commander les entraînements secondaires (8) associés.

5. Dispositif selon la revendication 4, **caractérisé en ce que** l'unité de calcul présente un algorithme de synchronisation.
